# EUROPÄISCHE PATENTANMELDUNG

(11) **EP 3 896 589 A1**
(43) Veröffentlichungstag der Anmeldung: **20.10.2021**
(21) Anmeldenummer: 20169998.0
(22) Anmeldetag: 17.04.2020
(51) Int. Cl.: G06F 21/55, G11C 29/12, G01R 31/3187

(54) **VERFAHREN UND HALBLEITERVORRICHTUNG MIT ÜBERWACHUNGSMODUL**

(71) Anmelder: Siemens Aktiengesellschaft, 80333 München (DE)
(72) Erfinder: Adam, Alexander, 92637 Weiden (DE); Aschauer, Hans, 81829 München (DE); Falk, Rainer, 85586 Poing (DE); Furch, Andreas, 85354 Freising (DE); Pfau, Axel, 80333 München (DE); Sehr, Wolfgang, 92242 Hirschau (DE); Sperl, Franz, 92526 Oberviechtach (DE)

(57) **Zusammenfassung**

Die Erfindung betrifft ein Verfahren und eine Halbleitervorrichtung mit Überwachungsmodul, wobei das Überwachungsmodul konfigurierbar bzw. rekonfigurierbar ist.

## Beschreibung

Die Erfindung bezieht sich auf eine Halbleitervorrichtung mit einem Überwachungsmodul und ein Verfahren zum Überwachen einer Halbleitervorrichtung.

Aufgabe der Erfindung ist es, zu bestehenden Lösungen eine Alternative bereitzustellen.

Nachfolgend werden Aspekte der Erfindung erläutert.

Gemäß einem ersten Aspekt betrifft die Erfindung eine Halbleitervorrichtung (P), beispielsweise ein Prozessor, ein ASIC oder FPGA, aufweisend:
- eine Konfigurationsschnittstelle (110), wobei die Konfigurationsschnittstelle dazu eingerichtet ist, einen Konfigurationsdatensatz zu empfangen und/oder zu laden;
- ein Überwachungsmodul (120), wobei
   ∘ das Überwachungsmodul dazu eingerichtet ist, eine Selbstüberwachung der Halbleitervorrichtung (P) durchzuführen,
   ∘ das Überwachungsmodul dazu eingerichtet ist, ein Prüfergebnis für die Selbstüberwachung der Halbleitervorrichtung zu ermitteln;
- ein Konfigurationsmodul (130), wobei
   ∘ das Konfigurationsmodul (130) dazu eingerichtet ist, das Überwachungsmodul und/oder die Selbstüberwachung anhand des Konfigurationsdatensatzes zu konfigurieren.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einer Halbleitervorrichtung kann im Zusammenhang mit der Erfindung beispielsweise ein Prozessor oder ein integrierter Halbleiterbaustein verstanden werden.

Unter einem Prozessor oder programmierbaren Prozessor kann im Zusammenhang mit der Erfindung beispielsweise eine elektronische Schaltung verstanden werden. Insbesondere kann es sich dabei um eine integrierte Digitalschaltung handeln. Ein Prozessor kann insbesondere einen Hauptprozessor (engl. Central Processing Unit, CPU), einen Mikroprozessor oder einen Mikrokontroller einen Crypto-Prozessor zur Durchführung von kryptographischen Operationen, einen AI-Prozessor (AI: artificial intelligence) zur Durchführung einer Inferenz für ein künstliches neuronales Netzwerk oder einen digitalen Signalprozessor, möglicherweise in Kombination mit einer Speichereinheit zum Speichern von Programmbefehlen etc. umfassen. Bei einem Prozessor kann es sich beispielsweise auch um einen IC (integrierter Schaltkreis (engl. Integrated Circuit), insbesondere einen FPGA (engl. Field Programmable Gate Array) oder einen ASIC (anwendungsspezifische integrierte Schaltung, engl.

Application-Specific Integrated Circuit), oder einen DSP (Digitaler Signalprozessor, engl. Digital Signal Processor) oder eine Signalverarbeitungseinheit oder einen Grafikprozessor GPU (Graphic Processing Unit) handeln. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert. Ein integrierter Halbleiterbaustein kann z. B. ein Digital-Halbleiterbaustein, ein Mixed-Signal-Halbleiterbaustein, ein MEMS-Halbleiterbaustein oder ein integrierter Analog-Halbleiterbaustein oder ein Transistor-Halbleiterbaustein mit integrierten Steuer- oder Schutzfunktionen sein.

Unter einem "Modul" kann im Zusammenhang mit der Erfindung beispielsweise eine Schaltung des programmierbaren Prozessors und/oder ein Speicher des programmierbaren Prozessors zum Speichern von Programmbefehlen verstanden werden. Beispielsweise ist die Schaltung speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder zu realisieren.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einem Speicher gespeichert ist) verstanden werden.

Unter "Laufzeit" und dergleichen, insbesondere in Bezug auf die Halbleitervorrichtung, kann im Zusammenhang mit der Erfindung beispielsweise der Zeitraum verstanden werden, zudem die Halbleitervorrichtung eingeschaltet ist oder in Betrieb ist.

Die Erfindung ist dahingehend vorteilhaft, dass eine Halbleitervorrichtung (z. B. ein ASIC, ein FPGA, eine CPU, eine MCU (Microcontroller Unit), ein DSP) selbst seine korrekte Funktionalität überwachen kann (z. B. um eine Integritätsüberwachung zur Laufzeit der Halbleitervorrichtung realisieren). Die Tiefe und Art kann auf unterschiedlichen baugleichen Exemplaren der Halbleitervorrichtung z. B. unterschiedlich ausgestaltet sein und außerdem aktualisiert werden. Die konfigurierte Funktionalität der Halbleitervorrichtung zur Integritätsüberwachung kann beispielsweise selbst in die Überprüfung durch das Überwachungsmodul mit einbezogen werden.

Die Halbleitervorrichtung ist im Vergleich zu konventionellen Halbleitervorrichtung insbesondere vorteilhaft, dass das Überwachungsmodul für eine Integritätsüberwachung der erfindungsgemäßen Halbleitervorrichtung konfiguriert werden kann. Die Konfiguration kann z. B. in einem nichtflüchtigen Speicher der Halbleitervorrichtung gespeichert sein,z.B. einem Flash, EEPROM Speicher oder in einem einmalprogrammierbaren Speicher (OTP Memory, OTP: one time programmable, basierend auf z.B. sogenannten eFuses oder AntiFuses), oder über eine Schnittstelle in einen flüchtigen Speicher des Halbleiterbausteins geladen werden. Ein Anwender des Halbleiterbausteins kann somit z. B. eine eigene Integritätsüberwachungs-Konfiguration in den Halbleiterbaustein einmalig oder wiederholt laden. Die konventionellen Halbleitervorrichtungen aus dem Stand der Technik verfügen jedoch nur über statische Überwachungsmodule, die damit Angreifern grundsätzlich bekannt sind, sodass ein motivierter Angreifer gezielt diese Überwachung umgehen kann. Dazu kann er auf einem einzelnen Test-IC den Angriff vorbereiten, der dann auf anderen baugleichen ICs identisch funktioniert. Durch die dynamische Konfigurierbarkeit der erfindungsgemäßen Halbleitervorrichtung, wird die Angreifbarkeit der statischen Überwachungsmodule vermieden.

Bei weiteren Ausführungsformen der Halbleitervorrichtung umfasst der Konfigurationsdatensatz Überwachungskriterien, wobei die Überwachungskriterien beispielsweise Integritätskriterien und/oder Sicherheitskriterien für Elemente und/oder Funktionen und/oder Teilbereiche der Halbleitervorrichtung für dessen Selbstüberwachung umfassen.

Bei weiteren Ausführungsformen der Halbleitervorrichtung wird anhand des Prüfergebnisses ein Steuersignal an einer Datenschnittstelle der Halbleitervorrichtung bereitgestellt, wobei beispielsweise mit dem Steuersignal bei einem Verletzen eines der Überwachungskriterien die Halbleitervorrichtung in einen sicheren Zustand versetzt wird und/oder eine Fehlermeldung ausgegeben wird und/oder mit einem Alarmsignal ein Administrator und/oder ein Sicherheitssystem informiert wird.

Bei weiteren Ausführungsformen der Halbleitervorrichtung umfasst der Konfigurationsdatensatz eine Konfiguration für die Selbstüberwachung, wobei anhand der Konfiguration die Selbstüberwachung beispielsweise randomisiert wird und wobei beispielsweise anhand des Konfigurationsdatensatzes die Konfiguration und/oder die Überwachungskriterien halbleitervorrichtungsspezifisch und/oder anwendungsspezifisch und/oder anwenderspezifisch festgelegt sind. Die Randomisierung kann z. B. unterschiedlich je Halbleitervorrichtung sein. Ebenso ist es möglich, dass die Randomisierung nach einem Reset der Halbleiterschaltung erfolgt.

Bei weiteren Ausführungsformen der Halbleitervorrichtung kodiert der Konfigurationsdatensatz spezifische Reaktionen für eine Verletzung eines jeweiligen Überwachungskriteriums, wobei insbesondere das Überwachungsmodul anhand der kodierten Reaktionen derart konfiguriert wird, dass sich das Überwachungsmodul so verhält, wie es durch die entsprechende kodierte Reaktion bei einer Verletzung eines entsprechenden Überwachungskriteriums vorgeben ist und wobei insbesondere die Reaktionen halbleitervorrichtungsspezifisch und/oder anwendungsspezifisch und/oder anwenderspezifisch sind.

Bei weiteren Ausführungsformen der Halbleitervorrichtung ist das Überwachungsmodul kommunikativ mit einer halbleitervorrichtungsexternen Prüfvorrichtung verbunden, wobei die Selbstüberwachung durch das Überwachungsmodul und/oder die halbleitervorrichtungsexternen Prüfvorrichtung durchgeführt wird, und wobei insbesondere die kommunikative Verbindung kryptographisch geschützt ist.

Bei weiteren Ausführungsformen der Halbleitervorrichtung ist der Konfigurationsdatensatz kryptographisch geschützt, wobei beispielsweise ein kryptographischer Schlüssel oder sein Hashwert zum Prüfen der Authentizität und Integrität und/oder zum Entschlüsseln des Konfigurationsdatensatzes in einem sicheren Speicher der Halbleitervorrichtung gespeichert ist, und wobei beispielsweise der sichere Speicher mittels OTP wie z.B. eFuses realisiert wird.

Bei weiteren Ausführungsformen der Halbleitervorrichtung wird der Halbleitervorrichtung erst nach einem erfolgreichen Laden des Konfigurationsdatensatzes in einen betriebsbereiten Zustand versetzt. Dies erfolgt beispielsweise durch das Freigeben von Schnittstellen (z. B. Datenschnittstellen) der Halbleitervorrichtung.

Bei weiteren Ausführungsformen der Halbleitervorrichtung ermittelt ein weiteres Überwachungsmodul der Halbleitervorrichtung zur Laufzeit der Halbleitervorrichtung ein Prüfergebnis für ein weiteres Überwachungskriterium, wobei das weitere Überwachungskriterium vorgibt, dass zur Laufzeit der Halbleitervorrichtung ein Konfigurationsdatensatz aktiv und/oder durch das Überwachungsmodul (120) verwendet wird, und wobei beispielsweise anhand des Prüfergebnisses ein Alarmsignal bereitgestellt wird, wenn das weitere Überwachungskriterium verletzt wird.

Bei weiteren Ausführungsformen der Halbleitervorrichtung erfolgt die Selbstüberwachung kontinuierlich oder zu vorgegebenen Zeitpunkten oder zu zufälligen Zeitpunkten oder bei einer Nutzung von vorgegebenen Elementen und/oder Funktionen und/oder Teilbereiche der Halbleitervorrichtung, wobei insbesondere die vorgegebenen Elemente und/oder Funktionen und/oder Teilbereiche der Halbleitervorrichtung durch den Konfigurationsdatensatz und/oder die Konfiguration des Konfigurationsdatensatzes und/oder durch die Überwachungskriterien und/oder durch die Integritätskriterien der Überwachungskriterien und/oder Sicherheitskriterien der Überwachungskriterien vorgegeben ist.

Gemäß einem weiteren Aspekt betrifft die Erfindung ein computerimplementiertes Verfahren zum Überwachen einer Halbleitervorrichtung, wie beispielsweise eines Prozessors, mit folgenden Verfahrensschritten:
- Laden und/oder empfangen eines Konfigurationsdatensatzes;
- Durchführen einer Selbstüberwachung der Halbleitervorrichtung (P), wobei für die Selbstüberwachung der Halbleitervorrichtung ein Prüfergebnis ermittelt wird;
- Konfigurieren der Selbstüberwachung anhand des Konfigurationsdatensatzes.

Bei weiteren Ausführungsformen des Verfahrens umfasst das Verfahren weitere Verfahrensschritte oder Merkmale, um die funktionalen Merkmale der Halbleitervorrichtung oder um weitere Merkmale der Halbleitervorrichtung, bzw. deren Ausführungsformen, zu realisieren.

Des Weiteren wird ein Computerprogrammprodukt mit Programmbefehlen zur Durchführung des genannten erfindungsgemäßen Verfahrens beansprucht, wobei mittels des Computerprogrammprodukts das erfindungsgemäße Verfahren durchführbar wird. Unter Computerprogrammprodukt mit Programmbefehlen zur Durchführung des genannten erfindungsgemäßen Verfahrens kann z. B. auch eine Digitalschaltungsbeschreibung, z.B. ein RTL-Code (RTL: Register Transfer Logic) in Form von VHDL-Code oder Verilog-Code, oder eine Netzliste oder Geometriedaten zur Produktion einer Halbleitervorrichtung, z.B. GDSII-Daten, verstanden werden.

Zusätzlich wird eine Variante des Computerprogrammproduktes mit Programmbefehlen zur Konfiguration eines Erstellungsgeräts, wie beispielsweise eines 3D-Druckers, eines Computersystems oder einer zur Erstellung von Prozessoren und/oder Geräten geeigneten Herstellungsmaschine, beansprucht, wobei das Erstellungsgerät mit den Programmbefehlen derart konfiguriert wird, dass die genannte erfindungsgemäße Halbleitervorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Halbleitervorrichtung erstellt.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung;
- Fig. 5: ein weiteres Ausführungsbeispiel der Erfindung.

In den Figuren sind funktionsgleiche Elemente mit denselben Bezugszeichen versehen, sofern nichts anderes angegeben ist. Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen, vorzugsweise ausschließlich durch Spezialhardware (z. B. einem Prozessor in Form eines ASIC oder FPGA) und/oder ein anderer Teil durch die (prozessor- und/oder speichergestützte) Software, bewirkt wird. Eine Kombination aus Hardware(komponenten) und Software(komponenten) kann beispielsweise auch durch eine in Software simulierte Hardware realisiert werden.

Insbesondere ist es, angesichts der hohen Anzahl an unterschiedlichen Realisierungsmöglichkeiten, unmöglich und auch für das Verständnis der Erfindung nicht zielführend oder notwendig all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

Die in den Figuren gezeigten Pfeile geben beispielsweise an, wie die Datenkommunikation zwischen den einzelnen Komponenten einer Ausführungsform realisiert ist. Beispielsweise gibt die Pfeilrichtung an, von welcher Komponente an welche Komponente Daten übertragen werden können. Dabei gibt beispielsweise eine Pfeilspitze an einem Ende eines solchen Verbindungselementes an, dass es sich hier um eine unidirektionale Kommunikationsverbindung handelt. Hat ein solches Verbindungselement an beiden Enden eine Pfeilspitze, handelt es sich beispielsweise um eine bidirektionale Kommunikationsverbindung.

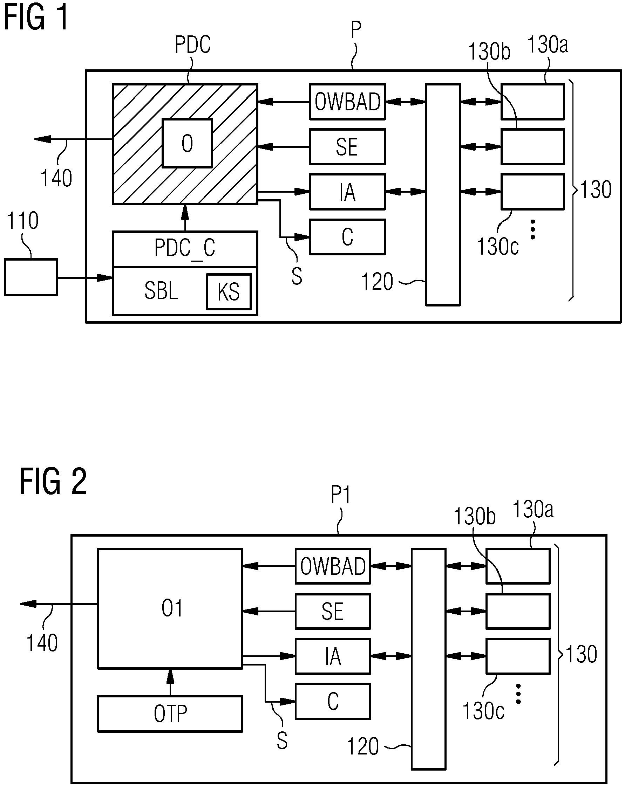

Fig. 1 zeigt eine schematische Darstellung einer Halbleitervorrichtung P.

Die Halbleitervorrichtung P, beispielsweise ein Prozessor, umfasst zumindest eine Konfigurationsschnittstelle, ein Überwachungsmodul O und ein Konfigurationsmodul PDC_C.

Die Konfigurationsschnittstelle ist dazu eingerichtet, einen Konfigurationsdatensatz zu empfangen und/oder zu laden. Der Konfigurationsdatensatz kann z. B. Überwachungskriterien umfassen, wobei die Überwachungskriterien beispielsweise Integritätskriterien und/oder Sicherheitskriterien für Elemente und/oder Funktionen und/oder Teilbereiche der Halbleitervorrichtung für dessen Selbstüberwachung umfassen. Dabei können die Kriterien beispielsweise Anforderungen und/oder Schwellwerte sein, die auf bestimmte Funktionen oder Teilbereiche des Prozessors gerichtet sind. Dabei bedeutet z. B. die Verletzung eines Kriteriums, dass eine unzulässige Überschreitung oder Unterschreitung eines Schwellwertes festgestellt wird.

Alternativ oder zusätzlich sind beispielsweise durch den Konfigurationsdatensatz die Konfiguration und/oder die Überwachungskriterien halbleitervorrichtungsspezifisch und/oder anwendungsspezifisch und/oder anwenderspezifisch festgelegt.

Das Überwachungsmodul O ist dazu eingerichtet, eine Selbstüberwachung der Halbleitervorrichtung P durchzuführen, wobei das Überwachungsmodul O dazu eingerichtet ist, ein Prüfergebnis für die Selbstüberwachung der Halbleitervorrichtung zu ermitteln. Dabei kann im Kontext der Erfindung unter einem Berechnen auch ein Ermitteln des Prüfergebnisses verstanden werden. Das Prüfergebnis gibt beispielsweise an, ob ein vorgegebenes Kriterium (z. B. Integritäts- und/oder Securitykriterium) eingehalten wurde. Die entsprechenden Überwachungskriterien, ggf. deren Verletzung mit entsprechenden Werten und/oder Art und Weise der Verletzung, werden vorzugsweise im Prüfergebnis gespeichert. Das Überwachungsmodul O kann dabei beispielsweise auch als Prüflogik bezeichnet werden.

Alternativ oder zusätzlich umfasst der Konfigurationsdatensatz eine Konfiguration für die Selbstüberwachung der Halbleitervorrichtung, wobei beispielsweise anhand der Konfiguration die Selbstüberwachung randomisiert wird. Hierzu ist das Überwachungsmodul O durch den Konfigurationsdatensatz derart eingerichtet, um die Selbstüberwachung randomisiert durchzuführen. Die Randomisierung erlaubt beispielsweise einem Anwender mehrere Exemplare von baugleichen Halbleitervorrichtungen unterschiedlich zu konfigurieren, indem eine unterschiedliche Konfiguration eingespielt wird. Diese realisieren beispielsweise dadurch eine unterschiedliche Selbstüberwachung. Ein Angreifer, der z. B. ein Exemplar (z. B. der Halbleitervorrichtung) erfolgreich angegriffen hat, kann somit ein weiteres Exemplar nicht identisch angreifen. Ein Anwender kann dazu z. B. mehrere Konfigurationen vorbereiten, von denen eine zufällig, d.h. randomisiert, ausgewählt und auf der Halbleitervorrichtung konfiguriert wird. Dies kann einmalig, z.B. bei der Produktion eines Geräts, in dem die Halbleitervorrichtung verbaut ist, erfolgen, oder wiederholt (z.B. bei einem Service des Geräts, bei einem Startvorgang des Geräts). Die unterschiedlichen Konfigurationen können z. B. in einer Variante automatisiert gebildet werden, indem z.B. Grenzwerte für die Integritätsüberwachung randomisiert werden, d.h. beispielsweise zufällig innerhalb eines Toleranzbereichs modifiziert werden (z.B. +/-1% oder +/- 3%oder +/- 10%), oder indem konfigurierte Arbeitsschritte so in der Abarbeitungsreihenfolge verändert werden, dass das Ergebnis der Abarbeitung nicht verändert wird. Weiterhin ist es z. B. möglich, dass die Halbleitervorrichtung (z. B. ein Halbleiterbaustein) beziehungsweise dessen Konfigurationsmodul das Überwachungsmodul mit einer von ihm randomisierten, modifizierten Konfiguration konfiguriert. So kann z.B. bei jedem Systemstart (Power-Up, Hochlauf) der Halbleitervorrichtung das Konfigurationsmodul (z. B. eine Konfigurationseinheit) ausgehend von der gespeicherten Konfiguration eine randomisiert modifizierte Konfiguration bilden und das Überwachungsmodul gemäß der randomisiert modifizierten Konfiguration konfigurieren.

Das Konfigurationsmodul PDC_C ist dazu eingerichtet das Überwachungsmodul O und/oder die Selbstüberwachung anhand des Konfigurationsdatensatzes zu konfigurieren.

Das Überwachungsmodul O kann beispielsweise dadurch gebildet werden, dass ein Programmable Digital Core PDC der Halbleitervorrichtung mittels des Konfigurationsdatensatzes von dem Konfigurationsmodul PDC_C entsprechend konfiguriert wird. Hierzu wird beispielsweise von einem Flashspeicher 110 über die Konfigurationsschnittstelle ein Bitstream mit dem entsprechenden Konfigurationsdatensatz geladen. Dies kann beispielsweise durch ein entsprechendes Bitstream-Lademodul SBL erfolgen, wobei das Bitstream-Lademodul SBL in weiteren Ausführungsformen noch einen Schlüsselspeicher KS umfasst.

In Ausführungsformen kann z. B. der Konfigurationsdatensatz und/oder der Bitstream mittels eines kryptographischen Schutzes kryptographische geschützt sein. Das Bitstream-Lademodul SBL kann kryptographische Schlüssel, die beispielsweise im Schlüsselspeicher KS gespeichert sind, den entsprechenden kryptographischen Schutz überprüfen (z. B. eine kryptographische Prüfsumme oder eine digitale Signatur) und/oder einen kryptographischen Schutz entfernen (z. B. eine Verschlüsselung des Konfigurationsdatensatzes und/oder des Bitstreams).

Anhand des Prüfergebnisses wird beispielsweise ein Steuersignal 140 an einer Datenschnittstelle der Halbleitervorrichtung bereitgestellt, wobei beispielsweise mit dem Steuersignal bei einem Verletzen eines der Überwachungskriterien die Halbleitervorrichtung in einen sicheren Zustand versetzt wird und/oder eine Fehlermeldung ausgegeben wird und/oder mit einem Alarmsignal ein Administrator und/oder ein Sicherheitssystem informiert wird. Alternativ oder zusätzlich können anhand des Prüfergebnisses und/oder des Steuersignals interne Funktionen und/oder Teilbereiche der Halbleitervorrichtung abhängig oder Ein-/Ausgabeschnittstellen deaktiviert und/oder gesperrt und/oder (einschränkend) rekonfiguriert werden.

Alternativ oder zusätzlich kann der Konfigurationsdatensatz in Varianten des Ausführungsbeispiels spezifische Reaktionen für eine Verletzung eines jeweiligen Überwachungskriteriums kodieren bzw. umfassen, wobei insbesondere das Überwachungsmodul anhand der kodierten Reaktionen derart konfiguriert wird, dass sich das Überwachungsmodul so verhält, wie es durch die entsprechende kodierte Reaktion bei einer Verletzung eines entsprechenden Überwachungskriteriums vorgegeben ist. Dabei sind insbesondere die Reaktionen halbleitervorrichtungsspezifisch und/oder anwendungsspezifisch und/oder anwenderspezifisch festgelegt.

Die Halbleitervorrichtung P kann beispielsweise noch weitere Komponenten umfassen. Dies kann z. B. ein Einwegbus sein OWBAD (One-Way Bus Access Data), der für eine Kommunikation bzw. Datenübertragung an den Programmable Digital Core PDC eingerichtet ist. Dadurch kann z. B. gewährleistet werden, dass die Integritätsüberwachung eine Hauptfunktionalität des Halbleiterbausteins nicht unbeabsichtigt beeinflussen kann.

Alternativ oder zusätzlich kann die Halbleitervorrichtung P eine oder mehrere Sensoren SE umfassen, die z. B. vom Überwachungsmodul verwendet werden, um die Selbstüberwachung, bzw. die Einhaltung der Überwachungskriterien, zu ermitteln. Hierzu senden die entsprechenden Sensoren ihre Daten an das Überwachungsmodul O und/oder an den Programmable Digital Core PDC, der das Überwachungsmodul O realisiert. Der eine Sensor SE oder die mehreren Sensoren SE überwachen dabei beispielsweise die Temperatur, die Spannung, die Taktrate, Strahlung, Lichteinfall, aufgetretene Fehler der Halbleitervorrichtung bzw. von Komponenten der Halbleitervorrichtung P oder eine Kombination aus diesen erfassten Größen.

Alternativ oder zusätzlich kann die Halbleitervorrichtung P ein integriertes Alarmmodul IA umfassen.

Alternativ oder zusätzlich kann die Halbleitervorrichtung P ein Clockmodul C umfassen, wobei eine Clock des Clockmoduls C z. B. mittels eines Steuerbefehls S angehalten werden kann, wenn z. B. die eine spezifische Reaktion für eine Verletzung einer der Überwachungskriterien vorgegeben ist.

Alternativ oder zusätzlich kann die Halbleitervorrichtung P IP-Blöcke 130 umfassen, die z. B. Prozessoren 130a, analoge Funktionen 130b wie A/D-Wandler, SRAM- oder Flash-Speicher 130c sein können.

Alternativ oder zusätzlich kann die Halbleitervorrichtung P einen internen Bus 120 umfassen, der beispielsweise ein Network on Chip / Chip Bus ist.

Ein Gerät (beispielsweise ein Feldgerät oder ein Steuerungsgerät z. B. für eine Fertigungsanlage oder ein Energieverteilungsnetz) kann beispielsweise die Halbleitervorrichtung umfassen.

Das Gerät kann beispielsweise jeweils zusätzlich noch eine weitere oder mehrere weitere Komponente/n umfassen, wie beispielsweise einen weiteren Prozessor, eine Speichereinheit, weitere Kommunikationsschnittstellen (z. B. Ethernet, WLAN, USB, Feldbus, PCI, PCIe), ein Eingabegerät, insbesondere eine Computertastatur oder eine Computermaus und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Mittels der Erfindung kann beispielsweise eine Selbstintegritätsüberwachung der Halbleitervorrichtung rekonfigurierbar realisiert werden. Das bedeutet, dass beispielsweise die Ausgestaltung der Selbstintegritätsüberwachung vom Anwender definiert und ggf. aktualisiert werden kann.

Anschaulich kann dies beispielsweise so interpretiert werden, dass auf einer Halbleitervorrichtung P (z. B. ein ASIC) ein aktualisierbarer Malware-Scanner (Virenscanner) vorgesehen ist, der das Ausnutzen einer Schwachstelle des Halbleiterbausteins bzw. der Halbleitervorrichtung im laufenden Betrieb (also zu Laufzeit) erkennt (z.B. Backdoor, Hardware Trojaner) .

Dies ist insbesondere vorteilhaft, damit ein Anwender einer Halbleitervorrichtung (z. B. ein Halbleiterbaustein (Integrated Circuit, IC)) die Integritäts-Überwachung selbst realisieren kann, sodass er sie unter seiner Kontrolle hat (Vertrauenswürdigkeit). Dadurch kann er sie insbesondere weiterhin an seine spezifischen Bedürfnisse anpassen.

Dies ist insbesondere auch dahingehend vorteilhaft, dass die Integritätsselbstüberwachung aktualisiert werden kann. Ähnlich wie z. B. bei einem Virenscanner kann somit, wenn neue Angriffe bekannt werden, gezielt der Schutz auf diese ausgeweitet werden.

Dies ist insbesondere auch vorteilhaft, da die Überwachung randomisiert werden (z.B. auf unterschiedlichen Geräte-Exemplaren, bei jedem Systemstart) kann. Dadurch wird es z. B. für einen Angreifer schwieriger, einen Angriff vorzubereiten, der nicht erkannt wird. Dies liegt z. B. daran, dass dem Angreifer die auf einem konkreten Exemplar des ASICs vorgesehene Überwachung nicht bekannt ist. Der Angreifer weiß z. B. nicht, wie die Überwachung individuell auf einem bestimmten Exemplar der Halbleitervorrichtung (z. B. ein ASIC) konfiguriert wurde. Dadurch kann die Überwachung weniger leicht ausgehebelt werden als bei den bekannten statischen Verfahren.

Die Erfindung, bzw. das Überwachungsmodul der Halbleitervorrichtung, kann z. B. als rekonfigurierbarer Digitalschaltungs-Block auf einem ASIC/IC (soft programmable logic core, auch als embedded FPGA vermarktet) erfolgen. Eine Realisierung kann z. B. auch mittels einer programmierbaren State-Machine (d. h. eine über einen Speicherbereich definierte State-Machine; im Speicher ist eine Tabelle mit Zustandsübergängen abgelegt) oder mittels eines CPU-Cores oder mittels eines DSP-Blocks (digitaler Signalprozessor) realisiert werden.

Die überwachbaren Daten werden innerhalb der Halbleitervorrichtung P (z. B. ein IC/ASIC) vorzugsweise rückwirkungsfrei durch die Sensoren SE bereitgestellt ("read only"). Dadurch wird vorzugsweise gewährleistet, dass die vom Anwender definierte Integritätsprüfung die Hauptfunktionalität der Halbleitervorrichtung nicht beeinträchtigen kann.

Die Integritätsprüfung der Selbstüberwachung kann, z. B. in einer Variante, ein externes Integritätsalarmsignal 140 bereitstellen, wobei dies insbesondere über ein Signal auf einem Pin der Halbleitervorrichtung P ICs/ASICs oder durch eine Nachricht auf einem Inter-Chip-Bus (z.B. SPI, I2C) erfolgt. Auch ist es möglich, dass die Halbleitervorrichtung P sich selbst sperren kann, wenn ein entsprechendes Überwachungskriterium verletzt wurde.

So kann in einer Variante die Integritätsprüfung der Selbstüberwachung z. B. ein Chip-internes Signal, bereitstellen, um z. B. den Buszugriff von einzelnen oder allen Design-IP-Blöcken 130 auf einen Chip-internen Bus 120 zu sperren oder zu beschränken, oder um den Chip "anzuhalten" (z.B. durch Sperren der Clock mit den Steuerbefehlen SE, Löschen von Registerinhalten).

Das Ausführungsbeispiel aus Fig. 1 kann beispielsweise als Digital-ASIC realisiert sein, bei dem die IP-Blöcke 130 über einen Chip-internen Bus 120 (Network on Chip, AMBA Bus o.ä.) verbunden sind. Diese IP-Blöcke 130 realisieren z. B. die eigentliche Funktionalität des ASICs (z.B. CPU, Signalverarbeitung, Datenanalyse, Ein-/Ausgabe).

Das Überwachungsmodul O, z. B. die rekonfigurierbare Integritätsselbstüberwachung, ist z. B. als der Programmable Digital Core PDC realisiert, d.h., dass z. B. ein rekonfigurierbarer Logikbereich, dessen Funktionalität durch den geladenen PDC-Bitstream definiert werden kann (ein PDC wird manchmal auch als Soft Programmable Logic Core oder als Synthesizable Programmable Core bezeichnet).

Dem Überwachungsmodul O werden z. B. Buszugriffsdaten oder Sensordaten von On-Chip-Sensoren SE bereitgestellt. Diese werden von dem durch den Konfigurationsdatensatz (z. B. ein Nutzer-definierbaren PDC-Bitstream) konfigurierten Überwachungsmodul O ausgewertet. Abhängig vom Prüfergebnis kann ein Steuersignal (z. B. Integritätsalarmsignal oder Steuerbefehle oder ein Steuersignal, das Steuerbefehle kodiert) bereitgestellt werden (z. B. ein Signal, das Chip-extern bzw. halbleitervorrichtungsextern 140 bereitgestellt wird), eine Alarmmeldung aktiviert werden, die anderen IP-Blöcken wiederum über den Chip-internen Bus bereitgestellt wird, oder die Clock (und damit der ganze Chip) kann angehalten werden. Die entsprechenden Reaktionen können z. B. auch vom Steuersignal getriggert werden. Die rekonfigurierbare Integritätsselbstüberwachung des Überwachungsmoduls O bietet dabei z. B. den Vorteil, dass auch die Reaktion auf eine erkannte Integritätsverletzung abhängig vom Anwendungsfall oder von bekannten Angriffen angepasst werden kann.

Dem Überwachungsmodul O können dabei folgende Daten, z. B. in Form von Rohdaten, von der Halbleitervorrichtung und/oder der Sensoren SE bereitgestellt werden. Diese können einzeln oder in Kombination folgende Daten sein:
Daten von halbleitervorrichtungsinternen/Chip-internen Bussen (IP-Blöcke, die über einen Bus wie z.B. AMBA angebunden sind); es können die Rohdaten bereitgestellt werden oder abgeleitete Daten wie Anzahl/Rate von Buszugriffen, Datenvolumen von Buszugriffen, Delay, Jitter oder andere Quality of Service-Parameter
Daten von Ein-/Ausgabeschnittstellen (Rohdaten oder abgeleitete Daten)
Interrupts von Ein-/Ausgabeschnittstellen
Performance-Counter von CPU-Cores, Caches, Memories
Sensorwerte von Sensoren SE (z.B. Temperatur, Glitch-Detektoren, Clock-Monitor, Voltage Monitor)
Selbsttest-Information von einzelnen IP-Blöcken des Chips
Chip individuelle Daten aus dem Fertigungsprozess (z.B. Chip-ID, Wafer-ID und Wafer-Koordinaten des Dies)
Einbringen und Überprüfen von kundenindividuellen Werten mit einem bestimmten Wertebereich, die spezifisch sind, zum Beispiel für ein technisches Verfahren oder einen technischen Prozess, in dem die Halbleitervorrichtung (IC/ASIC) eingesetzt wird (bzw. das Steuergerät, in dem der IC/ASIC verbaut ist).
Stromverbrauchsinformation (für IC insgesamt oder für einzelne Design-IP-Blöcke des ICs)
Inhalte oder Prüfsumme von OTP-Speicher / eFuses

Fig. 2 zeigt eine schematische Darstellung einer ersten Variante P1 der Halbleitervorrichtung aus Fig. 1.

Bei der ersten Variante der Halbleitervorrichtung P1 ist das Überwachungsmodul O1 als feste (hardwired) Digitalschaltung realisiert. Der Anwender kann jedoch über die Programmierung eines OTP-Speichers (OTP: one time programmable, einmalprogrammierbar) definieren, welche Prüfungen durch das Überwachungsmodul O1 (einschließlich der Überwachungskriterien, die auch als Prüfwerte bezeichnet werden können) erfolgen. Die Programmierung bzw. die Konfiguration erfolgt beispielsweise über den Konfigurationsdatensatz.

In einer anderen Variante (nicht dargestellt) sind die Überwachungskriterien änderbar. Hierzu können die Überwachungskriterien statt in einem OTP-Speicher OTP in einem änderbaren Speicher gespeichert werden (Ablage in ASIC-internen Flash-Speicher, batteriegepuffertem SRAM, oder Laden von einem externen Speicher, z.B. einem externen EEPROM).

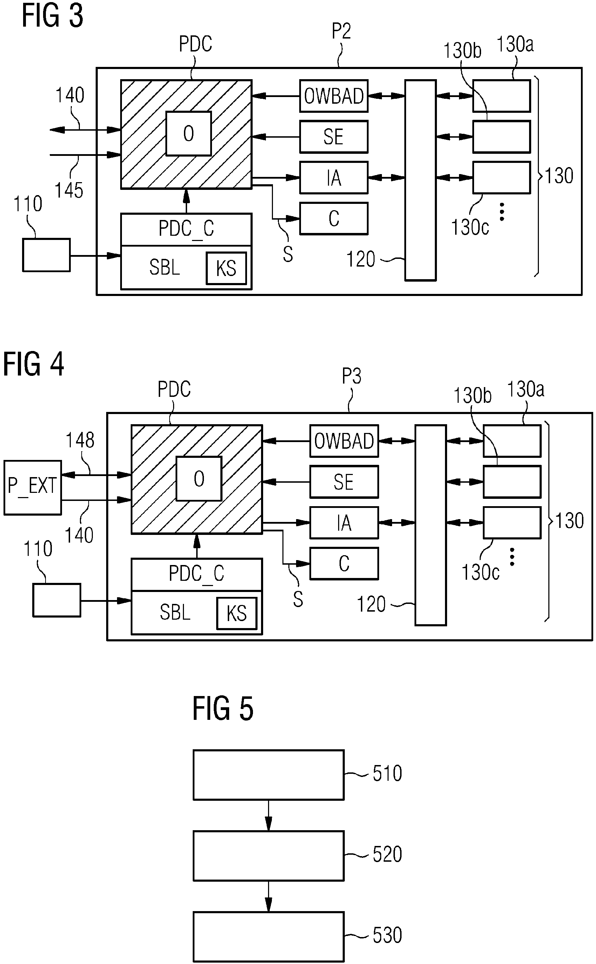

Fig. 3 zeigt eine schematische Darstellung einer zweiten Variante P2 der Halbleitervorrichtung aus Fig. 1 oder Fig. 2.

Bei der zweiten Variante der Halbleitervorrichtung P2 werden zusätzlich externe Monitoring-Daten 145, z. B. von externen Spannungssensoren (Power Management) oder der Takterzeugung, dem Überwachungsmodul O (z. B. eine rekonfigurierbare Integritätsselbstüberwachung) zur Selbstüberwachung bereitgestellt werden.

Fig. 4 zeigt eine schematische Darstellung einer dritten Variante P3 der Halbleitervorrichtung aus Fig. 1 oder Fig. 2 oder Fig 3.

Bei der dritten Variante der Halbleitervorrichtung P3 werden Überwachungsdaten (z. B. Integritätsdaten) des Überwachungsmoduls (z. B. eine rekonfigurierbare Integritätsselbstüberwachung) zu einer weiteren Prüfung an eine externe Prüfkomponente P_EXT weitergegeben. Diese kann, z. B. durch einen Mikrocontroller oder einen Crypto-Controller, realisiert sein.

Dadurch kann ein Anwender bei Bedarf weitergehende Prüfungen halbleitervorrichtungsextern (z. B. ASIC-extern) realisieren, die nicht oder nicht allein mit Hilfe dem halbleitervorrichtungsinternen (z. B. ASIC-internen) Überwachungsmodul O (z. B. eine rekonfigurierbare Integritätsselbstüberwachung) umsetzbar sind. Dazu können der externen Prüfkomponente P_EXT Rohdaten oder vorverarbeitete Daten über eine Schnittstelle 148 in Form von einer Datenübertragung bereitgestellt werden (z. B. über eine I2C- oder SPI-Schnittstelle). Beispielsweise kann die externe Prüfkomponente P_EXT auch das Steuersignal 140 bereitstellen (z. B. kann das Steuersignal 140 dem Überwachungsmodul O) oder die externe Prüfkomponente P_EXT stellt alternativ ein separates Steuersignal bereit, wobei das separate Steuersignal die gleichen Eigenschaften hinsichtlich der Steuerung der Komponenten der Halbleitervorrichtung hat, wie das Steuersignal 140 aus Fig. 1.

Die Datenübertragung kann dabei z. B. kryptographisch geschützt erfolgen. Das Laden eines Bitstreams bzw. des Konfigurationsdatensatzes erfolgt z. B. auch kryptographisch geschützt. Dazu wird ein geladener Konfigurationsdatensatz/Bitstream entschlüsselt und/oder es wird eine kryptographische Prüfsumme des Bitstreams/des Konfigurationsdatensatzes überprüft, bevor mit dem Bitstream/Konfigurationsdatensatz der PDC-Block konfiguriert wird, um das Überwachungsmodul O zu bilden. Unter Konfigurieren des PDC ist dabei zu verstehen, dass der Bitstream/Konfigurationsdatensatz in den PDC-Block geladen wird (PDC: programmable digital core, z.B. ein eingebetter FPGA-Block in einem ASIC), z. B. in dem der Bitstream/Konfigurationsdatensatz im PDC-Block aktiviert wird.

Durch den kryptographischen Schutz (Verschlüsselung/Prüfsumme) wird z. B. sichergestellt, dass nur ein zulässiger Bitstream/Konfigurationsdatensatz geladen werden kann. Der Schlüssel oder dessen Hash-Wert kann z.B. in eFuses oder einem OTP-Speicher der Halbleitervorrichtung (z. B. ein Digital ASICs) abgelegt sein. Dadurch wird z. B. sichergestellt, dass nur der Anwender eigene Prüfungen definieren und im Baustein ablegen kann.

Weiterhin ist es z. B. möglich, dass die Halbleitervorrichtung bzw. einzelne IP-Blöcke oder Außenschnittstellen erst dann freigeschaltet werden, wenn ein gültiger Bitstream/Konfigurationsdatensatz geladen ist.

Dadurch wird z. B. sichergestellt, dass die Halbleitervorrichtung (z. B. ein ASIC) nur dann die regulären Funktionen realisiert, wenn ein gültiger Bitstream/Konfigurationsdatensatz zur Selbstüberwachung (z. B. Integritätsüberwachung) geladen ist.

Weiterhin kann in einer weiteren Variante eine Überwachungskomponente (nicht dargestellt) vorgesehen sein, die zur Laufzeit überwacht, ob die geladene Konfigurationsdatensatz/Bitstream-Konfiguration aktiv sind. Die konfigurierte Funktionalität zur Selbstüberwachung/Integritätsüberwachung wird dadurch selbst ebenfalls in die Selbstüberwachung einbezogen. Die feste Funktionalität kann beispielsweise ein Liveliness-Signal des Überwachungsmoduls O (z. B. rekonfigurierbaren Logikblocks (PDC)) überwachen und bei Ausbleiben über einen vorgegebenen Zeitraum selbst ein Integritäts-Alarmsignal bereitstellen.

Die Fig. 5 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum digitalschaltungsbasierten oder rechnergestützten oder computerimplementierten Überwachen einer Halbleitervorrichtung dargestellt, wobei die Halbleitervorrichtung beispielsweise ein Prozessor wie ein FPGA oder ASIC ist.

Das Verfahren umfasst einen ersten Verfahrensschritt 510 zum Laden und/oder empfangen eines Konfigurationsdatensatzes.

Das Verfahren umfasst einen zweiten Verfahrensschritt 520 zum Durchführen einer Selbstüberwachung der Halbleitervorrichtung (P), wobei für die Selbstüberwachung der Halbleitervorrichtung ein Prüfergebnis ermittelt wird.

Das Verfahren umfasst einen dritten Verfahrensschritt 530 zum Konfigurieren der Selbstüberwachung anhand des Konfigurationsdatensatzes.

Die Erfindung betrifft ein Verfahren und einen Prozessor, der durch seinen spezifischen Aufbau eine Zeitverzögerung beim Starten des Prozessors nutzt, um Seitenkanalangriffe zu erschweren.

Obwohl die Erfindung im Detail durch die Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Halbleitervorrichtung (P), beispielsweise ein Prozessor, aufweisend:
- eine Konfigurationsschnittstelle, wobei die Konfigurationsschnittstelle dazu eingerichtet ist einen Konfigurationsdatensatz zu empfangen und/oder zu laden;
- ein Überwachungsmodul (O), wobei
o das Überwachungsmodul dazu eingerichtet ist, eine Selbstüberwachung der Halbleitervorrichtung (P) durchzuführen,
∘ das Überwachungsmodul dazu eingerichtet ist, ein Prüfergebnis für die Selbstüberwachung der Halbleitervorrichtung zu ermitteln;
- ein Konfigurationsmodul (PDC_C), wobei
∘ das Konfigurationsmodul (PDC_C) dazu eingerichtet ist, das Überwachungsmodul und/oder die Selbstüberwachung anhand des Konfigurationsdatensatzes zu konfigurieren.

2. Halbleitervorrichtung (P) nach Anspruch 1, wobei
- der Konfigurationsdatensatz Überwachungskriterien umfasst,
- die Überwachungskriterien beispielsweise Integritätskriterien und/oder Sicherheitskriterien für Elemente und/oder Funktionen und/oder Teilbereiche der Halbleitervorrichtung für dessen Selbstüberwachung umfassen.

3. Halbleitervorrichtung (P) nach einem der vorhergehenden Ansprüche, wobei
- anhand des Prüfergebnisses ein Steuersignal an einer Datenschnittstelle der Halbleitervorrichtung bereitgestellt wird,
- beispielsweise mit dem Steuersignal bei einem Verletzen eines der Überwachungskriterien die Halbleitervorrichtung in einen sicheren Zustand versetzt wird und/oder eine Fehlermeldung ausgegeben wird und/oder mit einem Alarmsignal ein Administrator und/oder ein Sicherheitssystem informiert wird.

4. Halbleitervorrichtung (P) nach einem der vorhergehenden Ansprüche, wobei
- der Konfigurationsdatensatz eine Konfiguration für Selbstüberwachung umfasst,
- anhand der Konfiguration die Selbstüberwachung beispielsweise randomisiert wird,
- beispielsweise anhand des Konfigurationsdatensatzes die Konfiguration und/oder die Überwachungskriterien halbleitervorrichtungsspezifisch und/oder anwendungsspezifisch und/oder anwenderspezifisch festgelegt sind.

5. Halbleitervorrichtung (P) nach einem der Ansprüche 2 - 4, wobei
- der Konfigurationsdatensatz spezifische Reaktionen für eine Verletzung eines jeweiligen Überwachungskriteriums kodiert,
- insbesondere das Überwachungsmodul anhand der kodierten Reaktionen derart konfiguriert wird, dass sich das Überwachungsmodul so verhält wie es durch die entsprechende kodierte Reaktion bei einer Verletzung eines entsprechenden Überwachungskriteriums vorgeben ist,
- insbesondere die Reaktionen halbleitervorrichtungsspezifisch und/oder anwendungsspezifisch und/oder anwenderspezifisch sind.

6. Halbleitervorrichtung (P) nach einem der vorhergehenden Ansprüche, wobei
- das Überwachungsmodul kommunikativ mit einer halbleitervorrichtungsexternen Prüfvorrichtung verbunden ist,
- die Selbstüberwachung durch das Überwachungsmodul und/oder die halbleitervorrichtungsexternen Prüfvorrichtung durchgeführt wird,
- insbesondere die kommunikative Verbindung kryptographisch geschützt ist.

7. Halbleitervorrichtung (P) nach einem der vorhergehenden Ansprüche, wobei
- der Konfigurationsdatensatz kryptographisch geschützt ist,
- beispielsweise ein kryptographischer Schlüssel zum Entschlüsseln des Konfigurationsdatensatzes oder sein Hashwert in einem sicheren Speicher der Halbleitervorrichtung gespeichert ist,
- beispielsweise der sichere Speicher mittels OTP, z. B. eFuses, realisiert ist.

8. Halbleitervorrichtung (P) nach einem der vorhergehenden Ansprüche, wobei die Halbleitervorrichtung erst nach einem erfolgreichen Laden des Konfigurationsdatensatzes in einen betriebsbereiten Zustand versetzt wird.

9. Halbleitervorrichtung (P) nach einem der vorhergehenden Ansprüche, wobei
- ein weiteres Überwachungsmodul der Halbleitervorrichtung zur Laufzeit der Halbleitervorrichtung ein Prüfergebnis für ein weiteres Überwachungskriterium ermittelt,
- das weitere Überwachungskriterium vorgibt, dass zur Laufzeit der Halbleitervorrichtung ein Konfigurationsdatensatz aktiv und/oder durch das Überwachungsmodul (120) verwendet wird,
- beispielsweise anhand des Prüfergebnisses ein Alarmsignal bereitgestellt wird, wenn das weitere Überwachungskriterium verletzt wird.

10. Halbleitervorrichtung (P) nach einem der vorhergehenden Ansprüche, wobei
- die Selbstüberwachung kontinuierlich oder zu vorgegebenen Zeitpunkten oder bei einer Nutzung von vorgegebenen Elementen und/oder Funktionen und/oder Teilbereiche der Halbleitervorrichtung erfolgt,
- insbesondere die vorgegebenen Elemente und/oder Funktionen und/oder Teilbereiche der Halbleitervorrichtung durch den Konfigurationsdatensatz und/oder die Konfiguration des Konfigurationsdatensatz und/oder durch die Überwachungskriterien und/oder durch die Integritätskriterien der Überwachungskriterien und/oder Sicherheitskriterien der Überwachungskriterien vorgegeben ist.

11. Computerimplementiertes Verfahren zum Überwachen einer Halbleitervorrichtung, beispielsweise ein Prozessor wie ein FPGA oder ASIC, mit folgenden Verfahrensschritten:
- Laden und/oder Empfangen eines Konfigurationsdatensatzes;
- Durchführen einer Selbstüberwachung der Halbleitervorrichtung (P), wobei für die Selbstüberwachung der Halbleitervorrichtung ein Prüfergebnis ermittelt wird;
- Konfigurieren der Selbstüberwachung anhand des Konfigurationsdatensatzes.

12. Computerprogrammprodukt mit Programmbefehlen zur Durchführung des Verfahrens nach Anspruch 11.

13. Computerprogrammprodukt mit Programmbefehlen für ein Erstellungsgerät zur Erstellung einer Halbleitervorrichtung nach einem der Ansprüche 1-10, wobei die Programmbefehle insbesodere das Erstellungsgerät derart konfigurieren, dass das Erstellungsgerät die Halbleitervorrichtung erstellt.

14. Bereitstellungsvorrichtung für das Computerprogrammprodukt nach Anspruch 12 und/oder 13, wobei die Bereitstellungsvorrichtung das Computerprogrammprodukt speichert und/oder bereitstellt.
